# EUROPEAN PATENT APPLICATION

(11) **EP 4 742 359 A1**
(43) Date of publication of application: **13.05.2026**
(21) Application number: 25158960.2
(22) Date of filing: 19.02.2025
(51) Int. Cl.: H01M 10/42, H01M 50/204, H01M 50/244

(54) **BATTERY PACK AND ENERGY STORAGE DEVICE**

(30) Priority: 12.11.2024 CN 202411605387
(71) Applicant: Zhejiang Jinko Energy Storage Co., Ltd., Jiaxing, Zhejiang (CN)
(72) Inventor: Shi, Yanyan, Jiaxing (CN); Wen, Junyun, Jiaxing (CN); Chen, Yuanhang, Jiaxing (CN)
(74) Representative: Slingsby Partners LLP

(57) **Abstract**

The present disclosure relates to a battery pack and an energy storage device. The battery pack includes a case, a battery module, a first bracket, and a second bracket. The case is provided with a first accommodating cavity and a first opening that communicate with each other. The battery module is installed to the case and is located in the first accommodating cavity. The first bracket is installed to the case and is located in the first accommodating cavity. The second bracket is movably connected to the first bracket. The battery management unit is installed to the second bracket. At least part of the second bracket and at least part of the battery management unit can move between the inside and the outside of the first accommodating cavity through the first opening. At least part of the battery management unit can be located in a relatively large space outside the first accommodating cavity, which facilitates users to maintain the battery management unit. The operational difficulty is relatively low when the users maintain the battery management unit, and the labor intensity of the users is therefore reduced.

## Description

### TECHNICAL FIELD

The present disclosure relates to the field of energy storage technologies, and in particular to a battery pack and an energy storage device.

### BACKGROUND

Accommodating space of a battery pack can accommodate battery modules, battery management units (BMUs), and mounting brackets. The BMU is installed to the case of the battery pack through the mounting bracket. The case is provided with an opening that can expose the BMU. Due to the relatively small accommodating space of the battery pack, when users need to maintain the BMU located within the accommodating space through the opening, corresponding operations is difficult complex, and thus the maintenance efficiency is low.

### SUMMARY

In view of this, the present disclosure provides a battery pack and an energy storage device, which have the technical advantage of facilitating users to maintain the battery management unit.

In a first aspect, the present disclosure provides a battery pack, including a case, a battery module, a first bracket, and a second bracket. The case includes a first accommodating cavity and a first opening that are in communication with each other. The battery module is installed to the case and located within the first accommodating cavity. The first bracket is installed to the case and located within the first accommodating cavity. The second bracket is movably connected to the first bracket. The battery management unit is installed to the second bracket. At least part of the second bracket and at least part of the battery management unit can move between the inside and the outside of the first accommodating cavity through the first opening.

For users, when the second bracket and the battery management unit are located within the first accommodating cavity and the battery management unit needs to be maintained, users can operate the second bracket to move relative to the first bracket, so that at least part of the second bracket and at least part of the battery management unit move from inside the first accommodating cavity to a position outside the first accommodating cavity through the first opening. Since at least part of the second bracket and at least part of the battery management unit can be located in a larger space outside the first accommodating cavity, this facilitates users to maintain the battery management unit, and also makes it easier for users to disassemble the battery management unit from the second bracket and install it to the second bracket again. After the battery management unit has been maintained and it has been visually confirmed that the battery management unit is stably installed to the second bracket, users can move the second bracket and the battery management unit located outside the first accommodating cavity back into the first accommodating cavity through the first opening.

Compared with the fixed bracket for installing the battery management unit of the battery pack in the related art, the bracket (including the first bracket and the second bracket) of the battery pack in the present disclosure is a movable structure. This movable bracket reduces the operational difficulty for users when maintaining the battery management unit, and the labor intensity of users is relatively low.

In one or more embodiments, the first bracket is rotatably connected to the second bracket, or the first bracket is telescopically connected to the second bracket.

In one or more embodiments, the first bracket is rotatably connected to the second bracket, and a rotation axis of a first revolute pair between the first bracket and the second bracket is perpendicular to a height direction of the battery pack, or the rotation axis of the first revolute pair between the first bracket and the second bracket is parallel to the height direction of the battery pack.

In one or more embodiments, the first bracket is rotatably connected to the second bracket, the second bracket further includes a first structural member and a second structural member, the first structural member is rotatably connected to the first bracket, and the first structural member is rotatably or telescopically connected to the second structural member. At least one battery management unit is installed to the second structural member.

In one or more embodiments, the first structural member is rotatably connected to the second structural member, and the second structural member can rotate relative to the first structural member to a first position or a second position. In the first position, the first structural member and the second structural member are in a folded state, and in the second position, the first structural member and the second structural member are in an unfolded state.

In one or more embodiments, the second bracket is located within the first accommodating cavity, and the second structural member is located on a side of the first structural member close to the battery module, or the second structural member is located on a side of the first structural member away from the battery module.

In one or more embodiments, at least one battery management unit is located between the first structural member and the second structural member, or at least one battery management unit is located on a side of the second structural member away from the first structural member.

In one or more embodiments, the first bracket is telescopically connected to the second bracket, and the first bracket and the second bracket are connected by a diamond-shaped folding frame, or the first bracket and the second bracket are connected by a telescopic rod.

In one or more embodiments, the second bracket is within the first accommodating cavity, and the first bracket is further in a restrained connection with the second bracket to restrict the movement of the second bracket relative to the first bracket. And/or, at least part of the second bracket is outside the first accommodating cavity, and the first bracket is further in a restrained connection with the second bracket to restrict the movement of the second bracket relative to the first bracket.

In a second aspect, the present disclosure provides an energy storage device. The energy storage device includes an inverter, a battery management system, and at least one battery pack as described above. The energy storage device of the present disclosure also has the technical effects of the battery pack mentioned above, which will not be repeated here.

It should be understood that the above general description and the following detailed description are only exemplary and do not limit the present disclosure.

### BRIEF DESCRIPTION OF DRAWINGS

To more clearly illustrate the technical solutions of embodiments of the present disclosure, the drawings required for the embodiments will be briefly introduced. It is appreciated that, the drawings described below are only some embodiments of the present disclosure. For those of ordinary skill in the art, other drawings can also be obtained based on these drawings without creative efforts.
FIG. 1 is a structural schematic diagram of a battery pack according to one or more embodiments of the present disclosure.
FIG. 2 is an exploded structural schematic diagram of a battery pack in FIG. 1.
FIG. 3 is a schematic diagram showing a partial cross-sectional structure of a battery pack according to one or more embodiments of the present disclosure, where the second bracket and the battery management unit are inside the first accommodating cavity.
FIG. 4 is a schematic diagram showing a partial cross-sectional structure of a battery pack according to one or more embodiments of the present disclosure, where at least part of the second bracket and at least part of the battery management unit are outside the first accommodating cavity.
FIGS. 5 and 6 are structural schematic diagrams of a first bracket and a second bracket according to one or more embodiments of the present disclosure.
FIGS. 7 and 8 are structural schematic diagrams of a first bracket and a second bracket according to one or more embodiments of the present disclosure.
FIGS. 9-11 are structural schematic diagrams of a first bracket, a first structural member and a second structural member according to one or more embodiments of the present disclosure.
FIGS. 12-18 are structural schematic diagrams of a first bracket, a first structural member, a second structural member and a battery management unit according to one or more embodiments of the present disclosure.
FIG. 19 is a schematic diagram showing a partial cross-sectional structure of a first revolute pair according to one or more embodiments of the present disclosure.
FIG. 20 is a schematic diagram showing a partial cross-sectional structure of a second bracket according to one or more embodiments of the present disclosure.
FIG. 21 is a schematic diagram showing a partial cross-sectional structure of a battery pack according to one or more embodiments of the present disclosure, where the second bracket and the battery management unit are inside the first accommodating cavity.
FIG. 22 is a schematic diagram showing a partial cross-sectional structure of a battery pack according to one or more embodiments of the present disclosure, where at least part of the second bracket and at least part of the battery management unit are outside the first accommodating cavity.
FIG. 23 is a structural schematic diagram of a first bracket, a second bracket and a diamond-shaped folding frame according to one or more embodiments of the present disclosure, where the diamond-shaped folding frame is in a folded state.
FIG. 24 is a structural schematic diagram of a first bracket, a second bracket and a diamond-shaped folding frame according to one or more embodiments of the present disclosure, where the diamond-shaped folding frame is in an unfolded state.
FIG. 25 is a structural schematic diagram of a first bracket, a second bracket and a telescopic rod according to one or more embodiments of the present disclosure, where the telescopic rod is in a retracted state.
FIG. 26 is a structural schematic diagram of a first bracket, a second bracket and a telescopic rod according to one or more embodiments of the present disclosure, where the telescopic rod is in a stretched state.
FIG. 27 is a structural schematic diagram of an energy storage box according to one or more embodiments of the present disclosure.
FIG. 28 is a structural schematic diagram of an energy storage cabinet according to one or more embodiments of the present disclosure.

Reference signs: 10-Battery pack; 1-Case; 1a-First accommodating cavity; 11-Bottom plate; 12-Top cover; 121-First opening; 13-Panel; 2-Battery module; 3a-First revolute pair; 3b-Second revolute pair; 3c-Diamond-shaped folding frame; 3d-Telescopic rod; 31-First bracket; 32-Second bracket; 321-First structural member; 321a-Second accommodating cavity; 321b-Second opening; 321c-Third opening; 322-Second structural member; 4-Battery management unit.

### DESCRIPTION OF EMBODIMENTS

To better understand the technical solutions of the present disclosure, embodiments of the present disclosure will be described in detail with reference to the accompanying drawings.

It should be clear that the described embodiments are only some of the embodiments of the present disclosure, not all of the embodiments.

The terms used in the embodiments of the present disclosure are only for the purpose of describing specific embodiments and are not intended to limit the present disclosure. The singular forms "a/an", "the" and "said" used in the embodiments of the present disclosure and the appended claims are also intended to include plural forms, unless the context clearly indicates otherwise.

It should be understood that the term "and/or" used herein is only an associated relationship describing associated objects, indicating that there can be three relationships. For example, A and/or B can include: A exists alone, both A and B exist simultaneously, and B exists alone. In addition, the character "/" herein generally indicates an "or" relationship between the associated objects.

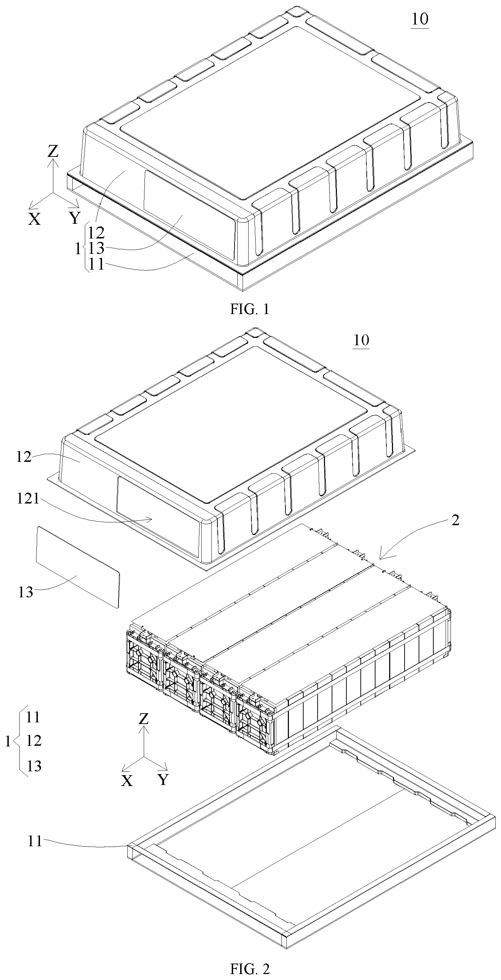

In a first aspect, embodiments of the present disclosure provide a battery pack. The battery pack 10 is shown in FIG. 1. The battery pack 10 can be applied to energy storage boxes, mobile power supplies, vehicles, or other devices that need to store electrical energy.

Referring to FIG. 2, the battery pack 10 includes a case 1 and a battery module 2. The battery module 2 includes multiple electrically connected secondary batteries (not labeled in the drawings). A secondary battery is a rechargeable battery or a storage battery, which refers to a battery that can be reused by charging to activate the active substances after discharging. The electrical connections among multiple secondary batteries include series connections, parallel connections, or hybrid connections. The hybrid connection refer to a hybrid connection manner including both series and parallel connections among multiple secondary batteries. Multiple secondary batteries may be arranged side by side along a length direction (e.g., direction X) of the battery pack 10, or they may be arranged side by side along a width direction (e.g., direction Y) of the battery pack 10.

In some other embodiments, multiple secondary batteries may be connected in series, parallel, or in a hybrid manner to form a battery module, and then multiple battery modules can be connected in series, parallel, or in a hybrid manner to form an entirety, which is then accommodated in the case 1.

The battery module 2 further includes a frame structure (not labeled in the drawings). The frame structure may include end-plate structures, side-plate structures, a top-plate structure, and a bottom-plate structure that are connected to each other. Multiple secondary batteries are located within the inner cavity of the frame structure and are stacked with each other in the inner cavity of the frame structure. The stacking direction can be the length direction, the width direction, or the height direction.

The battery module 2 also includes a busbar component, which is used to achieve electrical connections among multiple secondary batteries.

The secondary battery may be in the shape of a cylinder, a flat body, a cuboid, or other shapes.

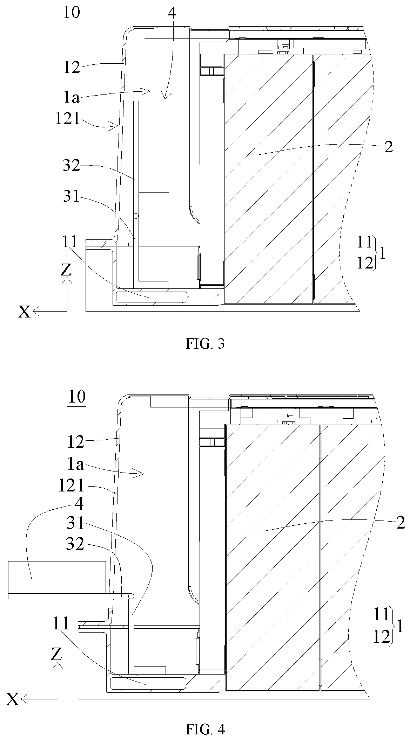

Referring to FIG. 3, the battery pack 10 further includes a first bracket 31, a second bracket 32, and a battery management unit (BMU) 4. As shown in FIG. 3, the case 1 is provided with a first accommodating cavity 1a and a first opening 121 that communicate with each other. The battery module 2 is installed to the case 1 and located within the first accommodating cavity 1a. The first bracket 31 is installed to the case 1 and located within the first accommodating cavity 1a. The second bracket 32 is movably connected to the first bracket 31, and the battery management unit 4 is installed to the second bracket 32. The battery management unit 4 is used to monitor the voltage, current, and temperature of the battery module 2, and also used to control the voltage and current of the battery module 2, as well as perform self-diagnosis and fault recording.

In the drawings of the present disclosure, directions X, Y, and Z are perpendicular to each other. The direction Z represents the direction from the bottom of the battery pack 10 to the top of the battery pack 10. The direction X represents the direction from the inside of the first accommodating cavity 1a through the first opening 121 to the outside of the first accommodating cavity 1a. The dotted lines in the drawings of the present disclosure represent structural section lines.

Referring to FIGS. 3 and 4, at least part of the second bracket 32 and at least part of the battery management unit 4 can move between the inside and the outside of the first accommodating cavity 1a through the first opening 121.

For users, when the second bracket 32 and the battery management unit 4 are located within the first accommodating cavity 1a as shown in FIG. 3, and the battery management unit 4 needs to be maintained, they can operate the second bracket 32 to move relative to the first bracket 31, so that at least part of the second bracket 32 and at least part of the battery management unit 4 move from the inside of the first accommodating cavity 1a through the first opening 121 to a position outside the first accommodating cavity 1a as shown in FIG. 4. Since at least part of the second bracket 32 and at least part of the battery management unit 4 can be placed in a larger space outside the first accommodating cavity 1a, which facilitates users to maintain the battery management unit 4, and also makes it easier for users to disassemble the battery management unit 4 from the second bracket 32 and install it to the second bracket 32 again. After the battery management unit 4 has been maintained and it can be easily confirmed that the battery management unit 4 is stably installed to the second bracket 32, users can move the second bracket 32 and the battery management unit 4 located outside the first accommodating cavity 1a back into the first accommodating cavity 1a through the first opening 121.

Compared with the fixed bracket for installing the battery management unit of the battery pack in the related art, the bracket (including the first bracket and the second bracket) of the battery pack in the embodiments of the present disclosure is a movable structure. This movable bracket reduces the operational difficulty for users when maintaining the battery management unit, and the labor intensity of users is relatively low.

In one or more embodiments, as shown in FIGS. 3 and 4, the first bracket 31 is rotatably connected to the second bracket 32. The second bracket 32 can rotate relative to the first bracket 31, so that at least part of the second bracket 32 and at least part of the battery management unit 4 can move between the inside and the outside of the first accommodating cavity 1a through the first opening 121.

The angle range of the second bracket 32 rotating relative to the first bracket 31 is within the range of 0° - 100°. For example, it may be 0°, 10°, 20°, 30°, 40°, 50°, 60°, 70°, 80°, 90°, or 100°.

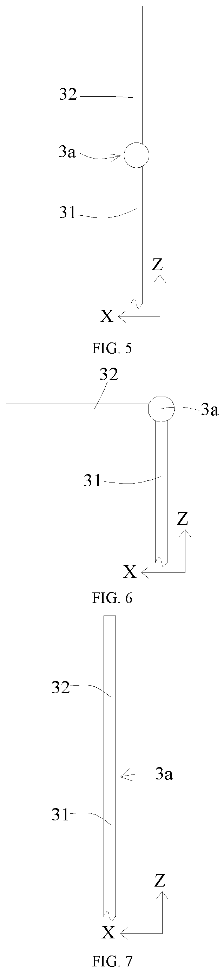

In addition, as shown in FIG. 5, the embodiments of the present disclosure does not limit the specific structure of the first revolute pair 3a between the first bracket 31 and the second bracket 32. The first revolute pair 3a only needs to have a rotation function. The first revolute pair 3a may refer to the structure of the revolute pair (also known as a turning pair, which allows two components to rotate relative to each other around a common axis) in the related art.

In one or more embodiments, as shown in FIGS. 5 and 6, the rotation axis of the first revolute pair 3a between the first bracket 31 and the second bracket 32 (along the direction Y) is perpendicular to the height direction of the battery pack (the direction Z) and also perpendicular to the direction X. With this arrangement, the second bracket 32 can perform a pitching motion relative to the first bracket 31 around the direction Y. The position of the second bracket 32 shown in FIG. 5 corresponds to the second bracket 32 being inside the first accommodating cavity 1a, and the position of the second bracket 32 shown in FIG. 6 corresponds to at least part of the second bracket 32 being outside the first accommodating cavity 1a.

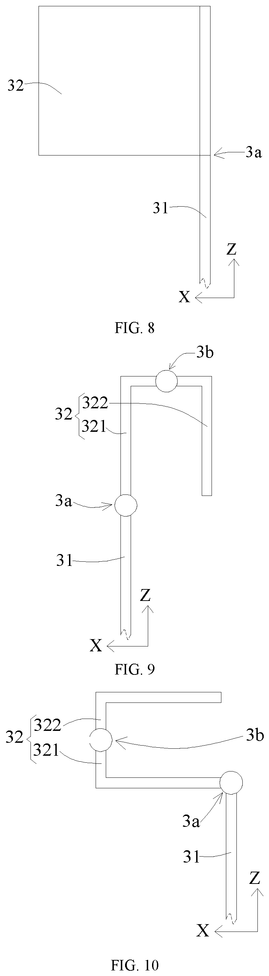

In one or more embodiments, as shown in FIGS. 7 and 8, the rotation axis of the first revolute pair 3a between the first bracket 31 and the second bracket 32 can also be parallel to the height direction of the battery pack (direction Z). With this arrangement, the second bracket 32 can perform a yawing motion relative to the first bracket 31 around the direction Z. The position of the second bracket 32 shown in FIG. 7 corresponds to the second bracket 32 being inside the first accommodating cavity 1a, and the position of the second bracket 32 shown in FIG. 8 corresponds to at least part of the second bracket 32 being outside the first accommodating cavity 1a.

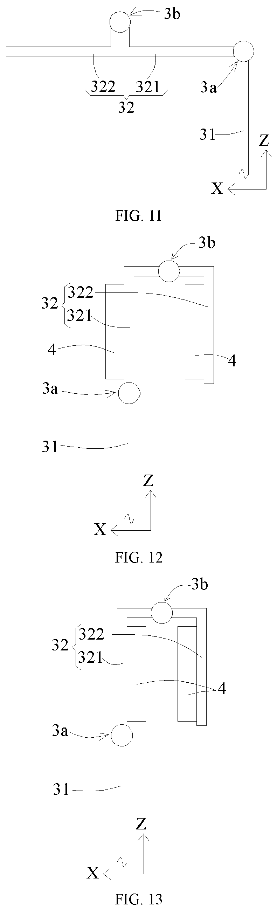

In one or more embodiments, as shown in FIG. 9, taking the rotation axis of the first revolute pair 3a (along the direction Y) being perpendicular to the direction X and the direction Z as an example, the second bracket 32 further includes a first structural member 321 and a second structural member 322. The first structural member 321 is rotatably connected to the first bracket 31, and the first structural member 321 is rotatably connected to the second structural member 322. At least one battery management unit is installed to the second structural member 322. With this arrangement, since the first structural member 321 can rotate relative to the first bracket 31 from the position shown in FIG. 9 to the position shown in FIG. 10, at least one battery management unit can move from inside the first accommodating cavity to outside the first accommodating cavity. The second structural member 322 can also rotate relative to the first structural member 321 from the position shown in FIG. 10 to the position shown in FIG. 11, enabling the position of at least one battery management unit relative to the first bracket 31 to be further adjusted, so that at least one battery management unit is located in a position convenient for users to operate, thereby further reducing the operational difficulty for users when maintaining the battery management unit.

The angle range of the second structural member 322 when rotating relative to the first structural member 321 is within the range of 0° - 180°. For example, it may be 0°, 10°, 20°, 30°, 40°, 50°, 60°, 70°, 80°, 90°, 100°, 110°, 120°, 130°, 140°, 150°, 160°, 170°, or 180°.

In addition, as shown in FIG. 9, the rotation axis of the second revolute pair 3b between the first structural member 321 and the second structural member 322 is parallel to the rotation axis of the first revolute pair 3a. That is, the rotation axis of the second revolute pair 3b is also perpendicular to the direction Z and the direction X.

In some other embodiments (not shown in the drawings), under the condition that the rotation axis of the first revolute pair between the first structural member and the first bracket is perpendicular to the height direction of the battery pack, the rotation axis of the second revolute pair can also be perpendicular to the rotation axis of the first revolute pair.

In some other embodiments (not shown in the drawings), under the condition that the second bracket includes a first structural member and a second structural member that are rotatably connected, the rotation axis of the first revolute pair between the first structural member and the first bracket can also be parallel to the height direction of the battery pack.

In some other embodiments (not shown in the drawings), the first structural member and the second structural member can also be telescopically connected. The second structural member can be stretched relative to the first structural member to a position away from the first bracket, or the second structural member can be retracted relative to the first structural member to a position close to the first bracket, which can further reduce the operational difficulty for users when maintaining the battery management unit.

The subsequent content of the present disclosure focuses on describing by taking the rotational connection manner between the first structural member and the second structural member as an example.

In addition, the battery management unit can be installed to the second structural member 322, or installed to the first structural member 321. If the battery pack includes two battery management units, both of them can be installed to the second structural member 322, or one battery management unit can be installed to the second structural member 322 and the other to the first structural member 321. If the battery pack includes more than two battery management units, the battery management units can be installed to both the first structural member 321 and the second structural member 322. Regardless of the number of battery management units, at least one battery management unit is installed to the second structural member 322.

Under the structural states shown in FIGS. 9 and 10, both the first structural member 321 and the second structural member 322 are in a folded state. The position of the second structural member 322 relative to the first structural member 321 shown in FIGS. 9 and 10 can also be defined as the first position. Under the structural state shown in FIG. 11, the first structural member 321 and the second structural member 322 are in an unfolded state. The position of the second structural member 322 relative to the first structural member 321 shown in FIG. 11 can be defined as the second position.

In one or more embodiments, as shown in FIG. 9, when the second bracket 32 is inside the first accommodating cavity, the second structural member 322 can be located on a side of the first structural member 321 in a direction opposite to the direction X. In other words, the second structural member 322 is located on a side of the first structural member 321 close to the battery module.

In other embodiments (not shown in the drawings), when the second bracket is inside the first accommodating cavity, the second structural member can be located on a side of the first structural member close to the first opening. In other words, the second structural member can be located on a side of the first structural member away from the battery module.

In the subsequent content of the present disclosure, the description will focus on describing by taking the situation where when the second bracket 32 is inside the first accommodating cavity, and the second structural member 322 is located on the side of the first structural member 321 in the direction opposite to the direction X as an example.

In one or more embodiments, as shown in FIGS. 12 and 13, at least one battery management unit 4 can be located between the first structural member 321 and the second structural member 322.

Taking the structure shown in FIG. 12 as an example, the position of the second bracket 32 corresponds to the second bracket 32 being inside the first accommodating cavity. Two battery management units 4 can be installed to the second bracket 32. One battery management unit 4 is installed to the first structural member 321, and this battery management unit 4 is on the side of the first structural member 321 away from the second structural member 322. The other battery management unit 4 is installed to the second structural member 322, and this other battery management unit 4 is between the second structural member 322 and the first structural member 321. With this arrangement, since the battery management unit 4 installed to the first structural member 321 is relatively close to the first opening, the users can first disassemble the battery management unit 4 located on the first structural member 321. Then, the users can operate the second bracket 32 to rotate relative to the first bracket 31, so that the second bracket 32 drives the other battery management unit 4 to move through the first opening to the outside of the first accommodating cavity. Next, the users operate the second structural member 322 to rotate from the first position to the second position relative to the first structural member 321, so that the other battery management unit 4 is located above the second structural member 322, which facilitates the users to easily maintain the battery management unit 4 installed to the second structural member 322.

Taking the structure shown in FIG. 13 as an example, the position of the second bracket 32 corresponds to the second bracket 32 being inside the first accommodating cavity. Two battery management units 4 can be installed to the second bracket 32. One battery management unit 4 is installed to the first structural member 321, and this battery management unit 4 is between the first structural member 321 and the second structural member 322. The other battery management unit 4 is installed to the second structural member 322, and this other battery management unit 4 is also between the second structural member 322 and the first structural member 321. With this arrangement, the users can first operate the second bracket 32 to rotate relative to the first bracket 31, so that the second bracket 32 drives the two battery management units 4 to move through the first opening to the outside of the first accommodating cavity. Then, the users operate the second structural member 322 to rotate from the first position to the second position relative to the first structural member 321, so that one of the battery management units 4 is located above the first structural member 321, and the other battery management unit 4 is located above the second structural member 322, which facilitates the users to maintain the battery management units 4.

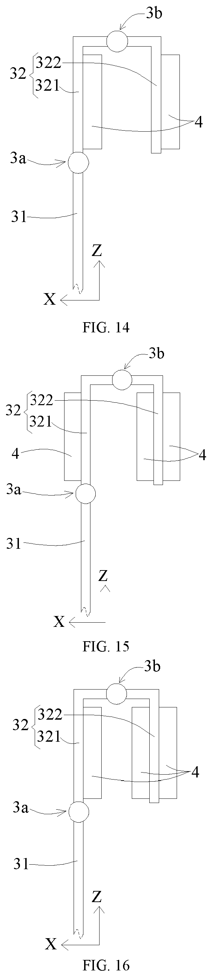

In one or more embodiments, as shown in FIG. 14, at least one battery management unit 4 is located on a side of the second structural member 322 away from the first structural member 321. In other words, at least one battery management unit 4 is located on a side of the second structural member 322 close to the battery module.

Taking the structure shown in FIG. 14 as an example, the position of the second bracket 32 corresponds to the second bracket 32 being inside the first accommodating cavity. Two battery management units 4 can be installed to the second bracket 32. One battery management unit 4 is installed to the first structural member 321, and this battery management unit 4 is between the first structural member 321 and the second structural member 322. The other battery management unit 4 is installed to the second structural member 322, and is located on the side of the second structural member 322 away from the first structural member 321. With this arrangement, the users can first operate the second bracket 32 to rotate relative to the first bracket 31, so that the second bracket 32 drives the two battery management units 4 to move through the first opening to the outside of the first accommodating cavity. At this time, one battery management units 4 is located above the first structural member 321, but the top of the battery management unit 4 above the first structural member 321 is blocked by the second structural member 322. The other battery management unit 4 is located above the second structural member 322, which facilitates the users to first easily maintain the battery management unit 4 located above the second structural member 322. Then, the users can operate the second structural member 322 to rotate from the first position to the second position relative to the first structural member 321, so that the second structural member 322 does not block the top of the battery management unit 4 installed to the first structural member 321, which facilitates the users to easily maintain the battery management unit 4 installed to the first structural member 321.

In some embodiments, the number and position of the battery management units 4 installed to the second bracket 32 can be arranged as shown in FIGS. 15 to 18. Regarding the maintenance sequence of each battery management unit 4, it can be understood by referring to the description for FIGS. 12 to 14 above. The structures shown in FIGS. 15 to 18 also have the beneficial effect of facilitating the users to easily maintain each battery management unit 4.

In one or more embodiments, when the second bracket 32 and the battery management unit 4 are inside the first accommodating cavity 1a, the first bracket 31 is in a restrained connection with the second bracket 32 to restrict the rotation of the second bracket 32 relative to the first bracket 31. With this arrangement, when there is no need to maintain the battery management unit 4, the second bracket 32 cannot rotate randomly relative to the first bracket 31 due to the restrained connection between the first bracket 31 and the second bracket 32. The position of the battery management unit 4 installed to the second bracket 32 relative to the first bracket 31 and relative to the case 1 is relatively fixed, which reduces the possibility of the battery management unit 4 colliding with other components in the case 1, resulting in a high degree of operational reliability of the battery management unit 4.

When the second bracket 32 and the battery management unit 4 are inside the first accommodating cavity 1a, the restrained connection between the first bracket 31 and the second bracket 32 can include at least one of snap connection, fastening connection, and magnetic attraction connection.

In one or more embodiments, when at least part of the second bracket 32 and at least part of the battery management unit 4 are outside the first accommodating cavity 1a, the first bracket 31 is in a restrained connection with the second bracket 32 to restrict the rotation of the second bracket 32 relative to the first bracket 31. With this arrangement, when users maintain the battery management unit 4, the second bracket 32 cannot rotate randomly relative to the first bracket 31 due to the restrained connection between the first bracket 31 and the second bracket 32. The position of the battery management unit 4 installed to the second bracket 32 and located outside the first accommodating cavity 1a relative to the first bracket 31 and relative to the case 1 is relatively fixed, which facilitates the users to maintain the battery management unit 4 located outside the first accommodating cavity 1a.

When at least part of the second bracket 32 and at least part of the battery management unit 4 are outside the first accommodating cavity 1a, the restrained connection between the first bracket 31 and the second bracket 32 can include at least one of snap connection, fastening connection, and magnetic attraction connection.

It should be noted that the restrained connection structure between the first bracket 31 and the second bracket 32 located inside the first accommodating cavity 1a and the restrained connection structure between the first bracket 31 and the second bracket 32 located outside the first accommodating cavity 1a are restrained connection structures at different positions.

If the restrained connection between the first bracket 31 and the second bracket 32 includes at least one of snap connection and magnetic attraction connection, the users can relatively easily change the connection state between the first bracket 31 and the second bracket 32 from the restrained connection state to the non-restrained connection state, which reduces the operational difficulty for the users, and thus improving the maintenance efficiency.

If the restrained connection between the first bracket 31 and the second bracket 32 includes a fastening connection, the reliability of the restrained connection structure between the first bracket 31 and the second bracket 32 is relatively high.

If the restrained connection between the first bracket 31 and the second bracket 32 includes a snap connection, for example, the first bracket 31 and the second bracket 32 can be snap-fitted together through a concave-convex matching structure (not shown in the drawings).

If the restrained connection between the first bracket 31 and the second bracket 32 includes a fastening connection, for example, an anti-loosening screw can be used to fasten the first bracket 31 and the second bracket 32. In detail, when the first bracket 31 is not fastened to the second bracket 32 by an anti-loosening screw, the anti-loosening screw is still loosely connected to the first bracket 31 or the second bracket 32, which means it is not easy to lose the anti-loosening screw during maintenance.

In one or more embodiments, if the second bracket 32 includes a first structural member 321 and a second structural member 322, when the first structural member 321 and the second structural member 322 are in the first position, they can be in a restrained connection to restrict the rotation of the second structural member 322 relative to the first structural member 321. When the first structural member 321 and the second structural member 322 are in the second position, they can also be in a restrained connection to restrict the rotation of the second structural member 322 relative to the first structural member 321. The restrained connection between the first structural member 321 and the second structural member 322 can include at least one of snap connection, fastening connection, and magnetic attraction connection. For the specific content of the restrained connection between the first structural member 321 and the second structural member 322, reference can be made to the above description of the restrained connection, and details will not be repeated here.

In one or more embodiments, the battery pack 10 further includes a cable (not shown in the drawings). The cable electrically connects the battery management unit 4 and the battery module 2, enabling the battery management unit 4 to monitor the battery module 2 through the cable. Part of the cable can be installed to the first revolute pair 3a, and part of the cable extends along the rotation axis of the first revolute pair 3a.

Taking the first revolute pair 3a shown in FIG. 5 as an example, when the battery management unit is installed to the second bracket 32, part of the cable can be installed to the first revolute pair 3a, and part of the cable can extend in a direction perpendicular to the direction Z and perpendicular to the direction X. With this arrangement, the first revolute pair 3a has a cable-organizing function (i.e., arranging the cable neatly for easy management and maintenance). Even if the second bracket 32 changes between the position shown in FIG. 5 and the position shown in FIG. 6, the part of the cable installed to the first revolute pair 3a only undergoes a twist that the cable is resistible following the first revolute pair 3a due to the flexibility of the cable, but this twist will not cause the cable to break or tear. Therefore, this arrangement makes it less likely for the users to damage the cable when maintaining the battery management unit.

Part of the cable can be installed inside the first revolute pair 3a or outside the first revolute pair 3a.

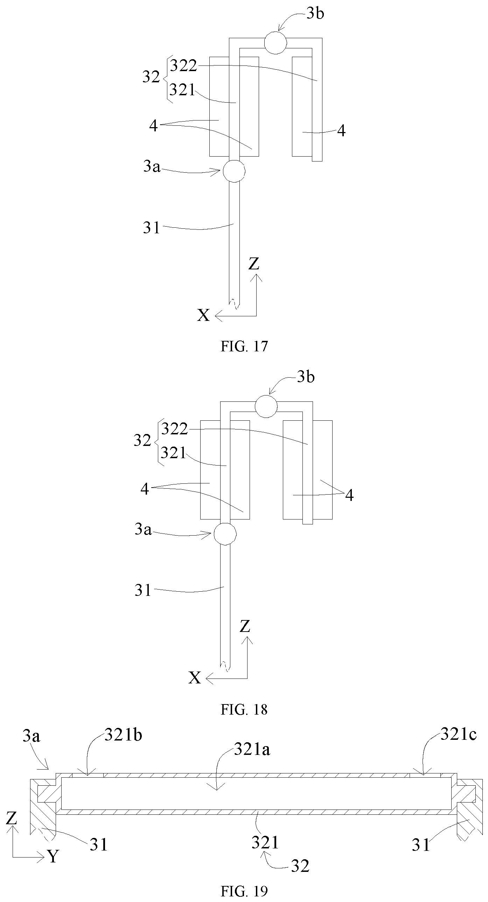

In one or more embodiments, as shown in FIG. 19, the first revolute pair 3a is provided with a second accommodating cavity 321a, a second opening 321b, and a third opening 321c that are in communication with each other. The second accommodating cavity 321a extends along the rotation axis of the first revolute pair 3a. In other words, the second accommodating cavity 321a extends along the direction Y. The second opening 321b and the third opening 321c are arranged at intervals along the rotation axis of the first revolute pair 3a. Namely, the second opening 321b and the third opening 321c are arranged at intervals along the direction Y. The cable can pass through the second opening 321b, the second accommodating cavity 321a, and the third opening 321c. With this arrangement, the first revolute pair 3a can also protect a part of the cable through its structure. Moreover, the degree of structural compactness between the first revolute pair 3a and the cable is relatively high, which occupies less space in the first accommodating cavity 1a. As a result, the volume of the battery module that can be accommodated in the first accommodating cavity 1a is larger, so that the battery pack 10 can be designed to store more electrical energy. Alternatively, the external dimensions of the case 1 can be made smaller, so that the volume of the battery pack 10 is smaller. In this way, the battery pack 10 possesses the advantage of portability.

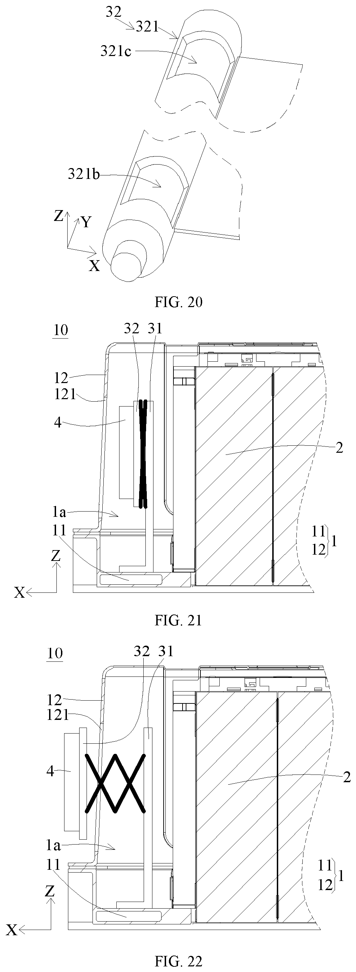

As shown in FIG. 19, the second accommodating cavity 321a, the second opening 321b, and the third opening 321c can be provided in the second bracket 32. For example, the second accommodating cavity 321a, the second opening 321b, and the third opening 321c can be provided in the first structural member 321. As shown in FIG. 20, the second opening 321b and the third opening 321c are formed in the curved sidewall surrounding the rotating shaft of the second bracket 32 and extend along the direction Y. With this arrangement, even if the second bracket 32 rotates relative to the first bracket 31, the part of the cable passing through the second opening 321b can swing within the second opening 321b. In other words, the part of the cable passing through the second opening 321b can swing in a plane parallel to the direction X and the direction Z. The part of the cable passing through the third opening 321c can swing within the third opening 321c. That is, the part of the cable passing through the third opening 321c can swing in a plane parallel to the direction X and the direction Z. With this arrangement, the rotation of the second bracket 32 does not interfere with the cable, and the cable will not be over-stretched by the rotating second bracket 32, thus preventing the cable from being torn or broken.

In other embodiments (not shown in the drawings), the second accommodating cavity, the second opening, and the third opening can also be provided in the first bracket.

For the structure shown in FIG. 9, if the battery management unit is installed to the second structural member 322, a part of the cable electrically connected to the battery management unit that is installed to the second structural member 322 can be installed to the second revolute pair 3b, and another part of the cable electrically connected to the battery management unit that is installed to the second structural member 322 can be installed to the first revolute pair 3a. With this arrangement, even when the second revolute pair 3b and the first revolute pair 3a rotate in sequence, the cable electrically connected to the battery management unit that is installed to the second structural member 322 will undergo a twist that the cable is resistible following the second revolute pair 3b and then another twist that the cable is resistible following the first revolute pair 3a. As a result, neither of these two twist will cause the cable to break or tear.

A part of the cable electrically connected to the battery management unit that is installed to the second structural member 322 can be installed inside the second revolute pair 3b or outside the second revolute pair 3b.

If a part of the cable electrically connected to the battery management unit that is installed to the second structural member 322 is installed inside the second revolute pair 3b, the structure of the second revolute pair 3b can refer to the structure of the first revolute pair shown in FIGS. 19 and 20. That is, the second revolute pair 3b can also be provided with an opening (not shown in the drawings) and an accommodating cavity (not shown in the drawings) for the cable to pass through.

In addition to the rotational connection between the first bracket 31 and the second bracket 32 described above, in one or more embodiments, as shown in FIGS. 21 and 22, the first bracket 31 and the second bracket 32 can also be telescopically connected to each other.

The second bracket 32 can telescopically move relative to the first bracket 31 along a direction parallel to the direction X, so that at least part of the second bracket 32 and at least part of the battery management unit 4 can move between the inside and the outside of the first accommodating cavity 1a through the first opening 121. As shown in FIG. 21, the second bracket 32 and the battery management unit 4 are inside the first accommodating cavity 1a. As shown in FIG. 22, the second bracket 32 and the battery management unit 4 are outside the first accommodating cavity 1a.

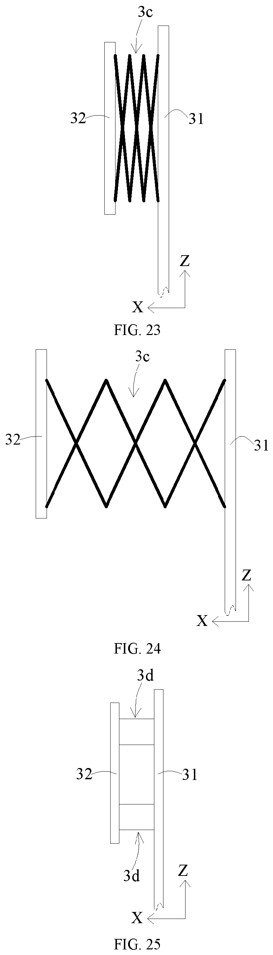

In one or more embodiments, as shown in FIGS. 23 and 24, the first bracket 31 and the second bracket 32 are connected by a diamond-shaped folding frame 3c.

As shown in FIG. 23, the diamond-shaped folding frame 3c is in a folded state, and the second bracket 32 is close to the first bracket 31. With this arrangement, the second bracket 32 and the battery management unit can be accommodated in the first accommodating cavity.

As shown in FIG. 24, the diamond-shaped folding frame 3c is in an unfolded state, and the second bracket 32 is away from the first bracket 31. With this arrangement, the second bracket 32 and the battery management unit can be located outside the first accommodating cavity.

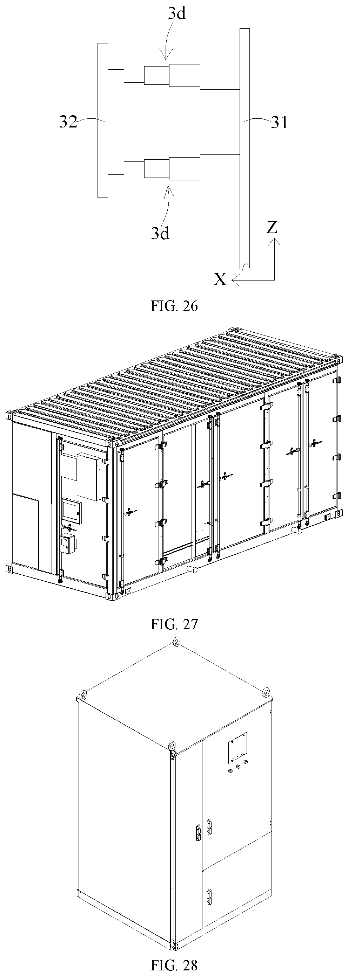

In one or more embodiments, as shown in FIGS. 25 and 26, the first bracket 31 and the second bracket 32 are connected by a telescopic rod 3d.

As shown in FIG. 25, the telescopic rod 3d is in a retracted state, and the second bracket 32 is close to the first bracket 31. With this arrangement, the second bracket 32 and the battery management unit can be accommodated in the first accommodating cavity.

As shown in FIG. 26, the telescopic rod 3d is in a stretched state, and the second bracket 32 is away from the first bracket 31. With this arrangement, the second bracket 32 and the battery management unit can be located outside the first accommodating cavity.

The telescopic rod 3d can have a two-stage, three-stage, four-stage, or higher-stage telescopic structure to meet the needs of different telescopic lengths.

In other embodiments (not shown in the drawings), the telescopic rod can be replaced by a telescopic slide-rail mechanism.

In one or more embodiments, when there is no need to maintain the battery management unit and the second bracket 32 is located in the first accommodating cavity, the second bracket 32 is in a restrained connection with the first bracket 31 to restrict the telescopic movement of the second bracket 32 relative to the first bracket 31, and limit the position of the battery management unit installed to the second bracket 32 in the first accommodating cavity, which reduces the possibility of the battery management unit colliding with other structural components in the first accommodating cavity, thereby improving the operational reliability of the battery management unit.

In one or more embodiments, the restrained connection between the second bracket 32 and the first bracket 31 includes at least one of snap connection, fastening connection, and magnetic attraction connection, so as to meet the need to restrict the telescopic movement of the second bracket 32 relative to the first bracket 31 in the first accommodating cavity.

For the specific structure and effect of the restrained connection between the second bracket 32 and the first bracket 31, reference can be made to the description of the restrained connection above, and details will not be repeated here.

In one or more embodiments, the battery management unit 4 and the second bracket 32 can be connected by a quick-disassemble structure. With this arrangement, the users can quickly disassemble the battery management unit 4 from the second bracket 32, or quickly assemble the battery management unit 4 to the second bracket 32. Therefore, this structure has the advantages of low operational difficulty for the users and high maintenance efficiency.

The quick-disassemble structure between the battery management unit 4 and the second bracket 32 can include at least one of snap connection and magnetic attraction connection.

In one or more embodiments, the battery management unit 4 and the second bracket 32 can be connected by a fastener. The fastener can be a connector such as a screw, a bolt, or a pin. The screw can be an anti-loosening screw, and the screw cannot separate from the second bracket 32 or the battery management unit 4.

In one or more embodiments, as shown in FIGS. 3 and 4, the case 1 includes a bottom plate 11. The first bracket 31 is installed on the bottom plate 11, and the second bracket 32 is located on a side of the first bracket 31 away from the bottom plate 11.

In one or more embodiments, as shown in FIGS. 3 and 4, the case 1 includes a top cover 12. The sidewall of the top cover 12 is provided with the first opening 121. The top cover 12 covers the bottom plate 11, and the bottom plate 11 and the top cover 12 enclose to form the first accommodating cavity 1a.

In other embodiments (not shown in the drawings), the first bracket can also be installed to the top cover.

The material of the case 1 (including the bottom plate 11 and the top cover 12) can be made of aluminum, aluminum alloy, or other metal materials. Alternatively, the case 1 can also be made of non-metal materials.

The bottom plate 11 and the top cover 12 can be connected by fasteners such as bolts. A sealing member (not shown in the drawings) can also be provided between the bottom plate 11 and the top cover 12 to seal the first accommodating cavity 1a.

In one or more embodiments, as shown in FIGS. 1 and 2, the battery pack 10 further includes a panel 13. The panel 13 is movably connected to the top cover 12, or the panel 13 can be detachably connected to the top cover 12. The panel 13 can cover the first opening 121 to close the first accommodating cavity 1a.

In a second aspect, embodiments of the present disclosure provide an energy storage device. The energy storage device includes an inverter, a battery management system (BMS), and at least one battery pack 10 described above.

The inverter is used to convert direct current into alternating current. The inverter has advantages such as high conversion efficiency, fast startup speed, and high safety. It can also have functions such as short-circuit protection, overload protection, over-voltage/undervoltage protection, and over-temperature protection.

The battery management system is used to make the battery pack work within a safe operating range. It can control the charging and discharging power of the battery pack according to factors such as ambient temperature, battery state, and power demand, improving the safety of the battery pack and making the working state of the battery pack more reasonable, which is beneficial to improving the endurance and service life of the battery pack.

Since the energy storage device of the embodiments of the present disclosure includes the battery pack described above, the energy storage device also has the technical effects of the battery pack described above.

In some embodiments, the energy storage device can be an energy storage box as shown in FIG. 27 (also known as a large-scale energy storage device, applicable to technical fields such as large-scale industrial production or power distribution). The energy storage box includes a box body with an accommodating space, and the inverter, the battery management system, and the battery pack are all located in this accommodating space.

In some other embodiments, the energy storage device can be an energy storage cabinet as shown in FIG. 28 (also known as an industrial and commercial energy storage device, applicable to the power needs of small-scale industries and commerce). The energy storage cabinet includes a cabinet body with an accommodating space, and the inverter, the battery management system, and the battery pack are all located in this accommodating space.

The above are only the preferred embodiments of the present disclosure and are not intended to limit the present disclosure. For those skilled in the art, the present disclosure can have various changes and modifications. The scope of the present disclosure shall be defined by the appended claims.

## Claims

1. A battery pack, comprising:
a case including a first accommodating cavity and a first opening that are in communication with each other;
a battery module installed to the case and located within the first accommodating cavity;
a first bracket installed to the case and located within the first accommodating cavity;
a second bracket movably connected to the first bracket; and
a battery management unit installed to the second bracket;
**characterized in that**, at least part of the second bracket and at least part of the battery management unit are capable of moving between the inside and the outside of the first accommodating cavity through the first opening.

2. The battery pack according to claim 1, **characterized in that**, the first bracket is rotatably connected to the second bracket, or the first bracket is telescopically connected to the second bracket.

3. The battery pack according to claim 2, **characterized in that**, the first bracket is rotatably connected to the second bracket; and
a rotation axis of a first revolute pair between the first bracket and the second bracket is perpendicular to a height direction of the battery pack, or the rotation axis of the first revolute pair between the first bracket and the second bracket is parallel to the height direction of the battery pack.

4. The battery pack according to claim 2, **characterized in that**, the first bracket is rotatably connected to the second bracket;
the second bracket further comprises a first structural member and a second structural member, the first structural member is rotatably connected to the first bracket, the first structural member is rotatably or telescopically connected to the second structural member; and
at least one battery management unit is installed to the second structural member.

5. The battery pack according to claim 4, **characterized in that**, the first structural member is rotatably connected to the second structural member, the second structural member is capable of rotating relative to the first structural member to a first position or a second position; and
in the first position, the first structural member and the second structural member are in a folded state, and in the second position, the first structural member and the second structural member are in an unfolded state.

6. The battery pack according to claim 5, **characterized in that**, the second bracket is located within the first accommodating cavity; and
the second structural member is located on a side of the first structural member close to the battery module, or the second structural member is located on a side of the first structural member away from the battery module.

7. The battery pack according to claim 6, **characterized in that**, at least one battery management unit is located between the first structural member and the second structural member, or at least one battery management unit is located on a side of the second structural member away from the first structural member.

8. The battery pack according to any one of claims 4 to 7, **characterized in that**, an angle range of the second structural member rotating relative to the first structural member is within a range of 0° - 180°.

9. The battery pack according to any one of claims 1 to 7, **characterized in that**, an angle range of the second bracket rotating relative to the first bracket is within a range of 0° - 100°.

10. The battery pack according to claim 2, **characterized in that**, the first bracket is telescopically connected to the second bracket; and
the first bracket and the second bracket are connected by a diamond-shaped folding frame, or the first bracket and the second bracket are connected by a telescopic rod.

11. The battery pack according to any one of claims 1 to 10, **characterized in that**, when the second bracket is located within the first accommodating cavity, the first bracket is in a restrained connection with the second bracket to restrict movement of the second bracket relative to the first bracket; and/or,
when at least part of the second bracket is outside the first accommodating cavity, the first bracket is in a restrained connection with the second bracket to restrict movement of the second bracket relative to the first bracket.

12. The battery pack according to any claim 11, **characterized in that**, the restrained connection between the first bracket and the second bracket when the second bracket is located within the first accommodating cavity and the restrained connection between the first bracket and the second bracket when the second bracket is outside the first accommodating cavity are restrained connections between the first bracket and the second bracket at different positions.

13. The battery pack according to claim 11 or 12, **characterized in that**, the restrained connection between the first bracket and the second bracket includes at least one of snap connection, fastening connection, or magnetic attraction connection.

14. The battery pack according to any one of claims 1 to 13, **characterized in that**, the battery pack further includes a cable, the cable electrically connects the battery management unit and the battery module, part of the cable is installed to the first revolute pair or the second revolute pair, and part of the cable extends along the rotation axis of the first revolute pair or the second revolute pair.

15. An energy storage device, **characterized by** comprising an inverter, a battery management system, and at least one battery pack according to any one of claims 1 to 14.

## Amended claims

### Amended claims in accordance with Rule 137(2) EPC.

1. A battery pack (10), comprising:
a case (1) including a first accommodating cavity (1a) and a first opening (121) that are in communication with each other;
a battery module (2) installed to the case (1) and located within the first accommodating cavity (1a);
a first bracket (31) installed to the case (1) and located within the first accommodating cavity (1a);
a second bracket (32) movably connected to the first bracket (31); and
a battery management unit (4) installed to the second bracket (32);
wherein at least part of the second bracket (32) and at least part of the battery management unit (4) are capable of moving between the inside and the outside of the first accommodating cavity (1a) through the first opening (121),
**characterized in that**, the first bracket (31) is rotatably connected to the second bracket (32),
the second bracket (32) further comprises a first structural member (321) and a second structural member (322), the first structural member (321) is rotatably connected to the first bracket (31), the first structural member (321) is rotatably connected to the second structural member (322),
at least one battery management unit (4) is installed to the second structural member (322),
the second structural member (322) is capable of rotating relative to the first structural member (321) to a first position or a second position, and
in the first position, the first structural member (321) and the second structural member (322) are in a folded state, and in the second position, the first structural member (321) and the second structural member (322) are in an unfolded state.

2. The battery pack (10) according to claim 1, **characterized in that**, a rotation axis (Y) of a first revolute pair (3a) between the first bracket (31) and the first structural member (321) is perpendicular to a height direction (Z) of the battery pack (10), or the rotation axis (Y) of the first revolute pair (3a) between the first bracket (31) and the first structural member (321) is parallel to the height direction (Z) of the battery pack (10).

3. The battery pack (10) according to claim 1, **characterized in that**, the second bracket (32) is located within the first accommodating cavity (1a); and
the second structural member (322) is located on a side of the first structural member (321) close to the battery module (2), or the second structural member (322) is located on a side of the first structural member (321) away from the battery module (2).

4. The battery pack (10) according to claim 3, **characterized in that**, at least one battery management unit (4) is located between the first structural member (321) and the second structural member (322), or at least one battery management unit (4) is located on a side of the second structural member (322) away from the first structural member (321).

5. The battery pack (10) according to any one of claims 1 to 4, **characterized in that**, an angle range of the second structural member (322) rotating relative to the first structural member (321) is within a range of 0° - 180°.

6. The battery pack (10) according to any one of claims 1 to 4, **characterized in that**, an angle range of the second bracket (32) rotating relative to the first bracket (31) is within a range of 0° - 100°.

7. The battery pack (10) according to any one of claims 1 to 6, **characterized in that**, when the second bracket (32) is located within the first accommodating cavity (1a), the first bracket (31) is in a restrained connection with the second bracket (32) to restrict movement of the second bracket (32) relative to the first bracket (31); and/or,
when at least part of the second bracket (32) is outside the first accommodating cavity (1a), the first bracket (31) is in a restrained connection with the second bracket (32) to restrict movement of the second bracket (32) relative to the first bracket (31).

8. The battery pack (10) according to any claim 7, **characterized in that**, the restrained connection between the first bracket (31) and the second bracket (32) when the second bracket (32) is located within the first accommodating cavity (1a) and the restrained connection between the first bracket (31) and the second bracket (32) when the second bracket (32) is outside the first accommodating cavity (1a) are restrained connections between the first bracket (31) and the second bracket (32) at different positions.

9. The battery pack (10) according to claim 7 or 8, **characterized in that**, the restrained connection between the first bracket (31) and the second bracket (32) includes at least one of snap connection, fastening connection, or magnetic attraction connection.

10. The battery pack (10) according to claim 2, **characterized in that**, the battery pack further includes a cable, the cable electrically connects the battery management unit (4) and the battery module (2), part of the cable is installed to the first revolute pair (3a) or a second revolute pair (3b), and part of the cable extends along the rotation axis (Y) of the first revolute pair (3a) or the second revolute pair (3b).

11. An energy storage device, **characterized by** comprising an inverter, a battery management system, and at least one battery pack (10) according to any one of claims 1 to 10.
